# EUROPÄISCHE PATENTSCHRIFT

(11) **EP 2 167 942 B1**
(45) Veröffentlichungstag und Bekanntmachung des Hinweises auf die Patenterteilung: **19.05.2021**
(21) Anmeldenummer: 07765219.6
(22) Anmeldetag: 12.07.2007
(51) Int. Cl.: G01N 21/64

(54) **OPTOELEKTRONISCHES SENSORSYSTEM**
OPTOELECTRONIC SENSOR SYSTEM
SYSTÈME DE CAPTEURS OPTOÉLECTRONIQUE

(43) Veröffentlichungstag der Anmeldung: 31.03.2010
(73) Patentinhaber: ASMAG-Holding GmbH, 4645 Grünau im Almtal (AT)
(72) Erfinder: SONNLEITNER, Max, A-4040 Linz (AT)
(74) Vertreter: Ofner, Clemens
(86) Internationale Anmeldenummer: PCT/EP2007/006354
(87) Internationale Veröffentlichungsnummer: WO 2009/006928

(56) Entgegenhaltungen:
- EP-A1- 1 336 089
- WO-A-00/63677
- WO-A-2006/131225
- WO-A1-2006/026796
- WO-A2-2007/054710
- WO-A2-2007/063457
- US-A1- 2006 049 396
- US-A1- 2006 051 244
- PEI-KUEN WEI ET AL: "Evanescent planar wave system for reading DNA microarrays on thin glass slides" BIOPHOTONICS, 2004. APBP 2004. THE SECOND ASIAN AND PACIFIC RIM SYMPOS IUM ON TAIPEI, TAIWAN 14-17 DEC. 2004, PISACTAWAY, NJ, USA,IEEE, US, 14. Dezember 2004 (2004-12-14), Seiten 236-237, XP010781729 ISBN: 978-0-7803-8676-1

## Beschreibung

Die Erfindung betrifft ein optoelektronisches Sensorsystem zur Anregung und Detektion von Proben.

In den Bereichen der Medizin, Pharmazie, Biochemie, Genetik oder Mikrobiologie spielt der Einsatz von Microarray-Biochips eine zunehmende Rolle. Innerhalb kürzester Zeit liefert ein solcher Chip die Ergebnisse einiger zehn hunderttausend Reaktionen. Microarray-Biochips bestehen aus einem Trägermaterial, auf dem biologische Sondenmoleküle in hoher Anzahl und Dichte in den sog. Microarrays definiert fixiert sind. Jeder dieser Punkte oder Spots ersetzt quasi ein Reaktionsgefäß.

Für die eigentliche Untersuchung werden beispielsweise fluoreszenzbasierende Methoden angewandt, bei denen eine Markierung der Proben erfolgt, so dass - nach Anregung durch eine Lichtquelle, beispielsweise einen Laser - Fluoreszenzsignale entstehen, die erfasst werden können. Herkömmliche Microarray-Auslesesysteme verwenden Laser zur punktweisen oder Gasentladungslampen (Quecksilber, Xenon, Metall-Halogenide) zur großflächigen Anregung der Fluoreszenz. Alle Systeme müssen beim Auslesevorgang das Sample oder die Lichtquelle scannen, erfordern also präzise Verfahrmechaniken. Außerdem benötigen solche Systeme aufwendige Optik zum Abbilden der Fluoreszenzsignale auf den Detektor. Diese Faktoren verhindern die notwendige Miniaturisierung aber auch eine kostengünstige Herstellung der Auslesesysteme.

Aus der WO 2006/026796 ist eine Vorrichtung bekannt, mit der derartige biochemische Proben wie Microarrays ausgewertet werden können.

Diese besteht aus einem Probenträger sowie einer Bilderfassungseinrichtung. Diese Bilderfassungseinrichtung weist eine photoaktive Schicht auf der Basis organischer Halbleiter zwischen zwei Elektrodenschichten auf, von denen die Elektrodenschicht zwischen der photoaktiven Schicht und den Proben zumindest bereichsweise lichtdurchlässig ausgebildet ist. Diese Bilderfassungeinrichtung kann direkt auf der dem Microarray gegenüberliegenden Oberfläche des Biochips aufgebracht werden und macht somit präzisen Verfahrmechaniken und aufwendige Abbildungsoptiken wie in herkömmlichen Auslesesystemen unnötig.

DieUS 2006/0051244 A1 offenbart eine Vorrichtung zur Erfassung der Bindungsreaktion in einer zu analysierenden Probe. Die Vorrichtung umfasst dabei einen optischen Wellenleiter auf einer Oberfläche, auf welcher zumindest ein bindungsspezifischer Rezeptor direkt oder indirekt aufgebracht ist. Ferner ist eine Lichtquelle vorhanden, um eine lumineszente Lichtabgabe innerhalb der Probe auszulösen, welche Lichtabgabe von zumindest einem, in das Halbleitersubstrat integrierten Strahlungsempfänger aufgenommen wird. Der Wellenleiter ist ferner in einer monolithischen Art im Halbleitersubstrat integriert angeordnet. Der Wellenleiter ist bevorzugt direkt angrenzend an den Halbleiterchip angeordnet und wird durch zwei parallele Ebenen gebildet, die sich entlang des Halbleiterchips erstrecken, wobei der Abstand zwischen den beiden Ebenen kleiner ist als die Wellenlänge der anregenden Strahlung. Insbesondere ist zwischen dem Halbleiterchip und dem Wellenleiter eine Zwischenschicht angeordnet, um eine Anpassung der Brechungsindizes zwischen dem Wellenleiter und dem Halbleiterchip zu ermöglichen. Diese Zwischenschicht ist bevorzugt als selbstklebende Schicht ausgebildet, insbesondere in Form einer Polymerschicht, Die Halbleiterstrahlungsquelle ist als Laserdiode oder LED ausgebildet und sendet eine bevorzugt schmalbandelektromagnetische Welle aus, in einem Frequenzbereich, in welchem zumindest einer der Strahlungsempfänger nicht sensitiv ist. Die Vorrichtung weist dabei ein optisches Einleitungssystem mit Mikroprismen auf, um die Strahlung in den Wellenleiter einzuleiten und dort mittels Totalreflexion weiterzuleiten. Dabei wird ein elektromagnetisches Feld im optisch dünneren Medium, insbesondere dem Probenbereich generiert und somit werden die lumineszenten Substanzen angeregt. Ferner ist offenbart, dass die Zwischenschicht direkt angrenzend an den Halbleiterchip angeordnet ist und somit die Negativform des Halbleiterchips aufweist.

P-K WIE, et al.: Evanescent planar wave system (2007) offenbart ein optisches Auslesesystem zur Erfassung fluoreszenter Signale eines Mikroarrays, wobei Laserlicht mittels Gradientenkopplung in eine dünne Glasplatte eingekoppelt wird und in dieser durch Totalreflexion weitergeleitet wird. Da-durch wird eine geringe Hintergrundanregung bei einer gleichzeitigen möglichst groß-flächigen und gleichmäßigen Ausleuchtung des Erfassungsbereichs erreicht. Das Reaktionsergebnis wird von einer CCD-Kamera aufgenommen, wobei der CCD-Kamera ein Bandpassfilter vorgeschaltet ist, um gestreutes Anregungslicht auszufil tern.

Die WO 2006/131225 A1 offenbart eine Vorrichtung zur hochsensitiven parallelen Detektion und quantitativen Bestimmung von Analyten in flüssigen Proben, wobei die totale interne Reflexionsfluoreszenz an einem speziell beschichteten Träger, in Kombination mit einem Bindungshemmtest eingesetzt wird. Zur Durchführung der Messung werden die zu untersuchenden Proben für den Bindungshemmtest vorbereitet, insbesondere werden die Proben mit den entsprechenden Bindungssubstanzen vorinkubiert. Nach dem Ende der Inkubation wird durch den Träger mittels einer Totalreflexion, Licht einer geeigneten Wellenllänge geleitet, wobei bei der Totalreflexion an der Phasengrenze ein evaneszentes Feld entsteht, durch das die sich an der Trägeroberfläche befindlichen Marker angeregt werden. Über eine angeschrägte Kante des Glasträgers wird das Laserlicht einer 2-5 cm vom Träger beabstandeten Laserdiode in den Glasträger eingekoppelt und durch Totalreflexion innerhalb des Trägers weitergeleitet. Dabei befinden sich die Reflexionspunkte jeweils im Abstand von ca. 6,5 mm, wobei an der Rückseite des Trägers Polymerfasern die Fluoreszenzprodukte über Kantenfilter zu den Fotodioden ableiten.

Aus der WO 00/63677 A1 ist bekannt, dass ein Lichtstrahl einer bekannten Wellenlänge an die Kante eines Glasträgermaterials unter einem Winkel eingeleitet wird, wodurch innerhalb der Trägerlage eine Totalreflexion initiiert wird, wodurch die Trägerlage zu einem Wellenleiter wird. Das Reflexionsergebnis wird von einer gekühlten CCD-Kamera aufgenommen, wodurch eine besonders kurze Aufnahmezeit erreicht wird. Ferner tritt ein Teil des Lichts aus der Oberfläche der Trägerlage aus und regt eine Fluoreszenz in den, an der Oberfläche der Trägerlage angeordneten Molekülen, an.

Für den Einsatz dieses Bilderfassungssystems zum fluoreszenzbasierten Auslesen von biochemischen Proben ohne Verfahrmechanik und Abbildungsoptik müssen folgende Bedingungen erfüllt werden:
▪ Die Probe muss homogen mit Anregungslicht ausgeleuchtet sein.
▪ Ausschließlich das entstehende Fluoreszenzlicht darf die photoaktive Schicht erreichen.
▪ Der Abstand zwischen fluoreszierender Probe (in den Microarray-Spots) und Sensor soll in der gleichen Größenordnung wie der Center-to-Center Abstand der Microarrayspots liegen um Crosstalk Probleme zwischen den Pixel zu vermeiden.

Aufgabe der Erfindung ist es daher, ein optoelektronisches Sensorsystem zu schaffen, welches diese Bedingungen erfüllt.

Ad homogene Ausleuchtung:
Ist das Bilderfassungsystem direkt gegenüber der Probe auf dem Biochip aufgebracht, so muss die Probe nicht mehr abgerastert werden. Allerdings erfordert ein solcher Aufbau, die Probe homogen mit genügend hoher Anregungsintensität auszuleuchten.

Ad Blockieren des direkten oder gestreuten Anregunglichts:
Jedes fluoreszenzbasierte Messsystem benötigt eine Lichtquelle zum Anregen der Fluoreszenz. Die Intensität dieses Anregungslichtes ist dabei um viele Größenordnungen stärker als die des resultierenden Fluoreszenzlichtes. Für verlässliche Messergebnisse darf nur das Fluoreszenzlicht auf die photoaktive Schicht gelangen, jedoch keinerlei direktes oder gestreutes Anregungslicht, weil das zu Messfehlern führen würde.

Ad Abstand zwischen Probe und Sensor:
Eindeutiges Zuweisen des auf der Bilderfassungseinrichtung detektierten Signals zur Fluoreszenz eines Microarrayspots ist Voraussetzung für korrekte Messergebnisse. Typischerweise betragen die Microarray-Spotdurchmesser 100-200µm mit einem Center-to-Center Abstand von etwa 300 µm. Um bei einer dem Microarray gegenüberliegenden Bildererfassungseinrichtung direkt auf dem Biochip den soganannten Signal-Crosstalk zu vermeiden, muss deshalb der Abstand zwischen Probe und Bilderfassungseinrichtung in der gleichen Größenordnung wie der Spotabstand liegen.

Gelöst werden diese Aufgaben erfindungsgemäß durch ein optoelektronisches Sensorsystem gemäß Anspruch 1, mit einer Oberfläche zum Aufbringen der Proben und einem darunter liegenden Schichtsystem mit einer transparenten ersten Schicht mit einem ersten Brechungsindex, in welche Licht zum Anregen der Probe einkoppelbar ist, und einer angrenzenden zweiten Schicht mit einem zweiten, kleineren Brechungsindex zur Erzeugung einer Totalreflektion des eingekoppelten Lichtes und einer daraus resultierenden sich ausbreitenden planaren Lichtwelle in der ersten Schicht und einer unter der zweiten Schicht liegenden optoelektrischen Sensorschicht bestehend aus einer oder mehreren Halbleiterschichten zwischen zwei Elektrodenschichten, von den die der Probe zugewandte Elektrodenschicht zumindest bereichsweise lichtdurchlässig ausgebildet ist.

Durch die Totalreflexion an der Schicht mit kleinerem Brechungsindex wird erreicht, dass das Anregungslicht sich nur in der ersten Schicht mit dem etwas größeren Brechungsindex ausbreitet.

Die biologischen Proben befinden sich auf der Oberseite dieser Schicht. Dort findet Totalreflexion statt bei der ein sogenanntes evaneszentes Feld mit einer Eindringtiefe von 100 bis 500nm entsteht, welches selektiv nur die Moleküle nahe der Oberfläche anregt. Die dann von den Proben ausgesandten Fluoreszenzsignale oder auch Lumineszenzsignale können ungehindert von der optoelektrischen Sensorschicht empfangen werden, ohne dass Messfehler durch Streulicht auftreten.

Vorzugsweise erfolgt die Einleitung des anregenden Lichtstrahles dadurch, dass an der ersten Schicht ein Prisma oder Gitter zum Einkoppeln des Lichtes angeordnet ist.

Nach einer vorteilhaften Ausgestaltung besteht die Schicht mit kleinerem Brechungsindex aus Polydimethylsiloxan (PDMS).

Dieser kann noch ein absorbierendes Pigment/Farbstoff als optischer Filter zugesetzt sein. Vorzugsweise kann sich zwischen zweiter Schicht und optoelektronischem Sensorsystem eine zusätzliche Schicht mit optischen Filtereigenschaften oder nur partieller Lichtdurchlässigkeit befinden.

Die photosensitive optoelektrische Schicht ist auf der Basis eines organischen Halbleiters ausgeführt.

Ein optoelektronisches Sensorsystem gemäß der Erfindung kann durch folgenden Aufbau gekennzeichnet sein:
- einen ersten Glasträger zum Auftragen von Microarray Spots auf seiner Oberfläche
- einen zweiten Glasträger als Substrat für den Sensor
- einen dritten Glasträger als Einkapselung für den Sensor
- eine zwischen dem zweiten und dem dritten Glasträger liegende photosensitive optoelektrische Schicht, bestehend aus einer oder mehreren Halbleiterschichten zwischen zwei Elektrodenschichten, von denen die der Probe zugewandte Elektrodenschicht zumindest bereichsweise lichtdurchlässig ist,
- einer PDMS Zwischenschicht zwischen dem ersten und dem dritten Glasträger
- sowie einem auf der Oberfläche des ersten Glasträgers angeordneten Prisma, das den von einer Lichtquelle emittierten Lichtstrahl unter definiertem Winkel in den ersten Glasträger einleitet, wo er unter Totalreflexion an der PDMS Zwischenschicht in dem ersten Glasträger als planare Lichtwelle geführt wird.

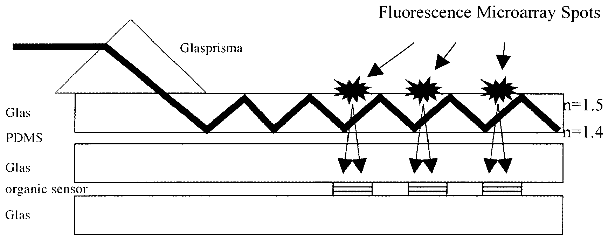

Dieser Aufbau ist auch in der Zeichnung schematisch dargestellt.

Der Eintrittswinkel des Lichtstrahls in den ersten Glasträger liegt vorzugsweise oberhalb des Grenzwinkels für Totalreflexion zwischen Glas und PDMS, also oberhalb von 69°. (Brechungsindex: Glas: n1 =1.52, PDMS: n2=1.42 -> Winkel für Totalreflexion: α = arcsin(n2/n1) = 69.1)°
Ein optoelektronisches Sensorsystem mit diesem Aufbau zeichnet sich durch seine geringen Abmessungen aus, d. h. die Dicke des ersten Glasträgers kann beispielsweise 50-200 µm, des ersten Glasträgers zusammen mit dem dritten Glasträger und der PDMS Zwischenschicht etwa 300 µm und die Gesamtdicke des Sensors etwa 1mm betragen.

Als erregende Lichtquelle ist ein Laser, LED oder OLED mit einer Wellenlänge von 300-650 nm vorgesehen.

## Patentansprüche

1. Optoelektronisches Sensorsystem zur Anregung und Detektion von Proben, mit einer Oberfläche zum Aufbringen der Proben und einem darunter liegenden Schichtsystem mit einer transparenten ersten Schicht mit einem ersten Brechungsindex, in welche Licht zum Anregen der Probe einkoppelbar ist, und einer angrenzenden zweiten Schicht mit einem zweiten, kleineren Brechungsindex zur Erzeugung einer Totalreflexion des eingekoppelten Lichtes und einer daraus resultierenden sich ausbreitenden planaren Lichtwelle in der ersten Schicht, wobei die Oberfläche zum Aufbringen der Proben durch die Oberseite der ersten Schicht gebildet wird und dort Totalreflexion stattfindet, bei der ein evaneszentes Feld mit einer Eindringtiefe von 100 bis 500 nm entsteht, und einer unter der zweiten Schicht liegenden optoelektrischen Sensorschicht bestehend aus einer oder mehreren Halbleiterschichten auf der Basis eines organischen Halbleiters zwischen zwei Elektrodenschichten, von denen die der Probe zugewandte Elektrodenschicht zumindest bereichsweise lichtdurchlässig ausgebildet ist, **dadurch gekennzeichnet, dass** die optoelektrische Sensorschicht sich zwischen zwei Glasschichten befindet, und dass das Sensorsystem dazu eingerichtet ist, dass als anregende Lichtquelle ein Laser, LED oder OLED mit einer Wellenlänge von 300- 650 nm eingesetzt wird.

2. Optoelektronisches Sensorsystem nach Anspruch 1 , **dadurch gekennzeichnet, dass** an der ersten Schicht ein Prisma oder Gitter zum Einkoppeln des Lichtes angeordnet is.

3. Optoelektronisches Sensorsystem nach Anspruch 1 oder 2, **dadurch gekennzeichnet, dass** die erste Schicht aus Glas besteht.

4. Optoelektronisches Sensorsystem nach einem der vorstehenden Ansprüche, **dadurch gekennzeichnet, dass** die erste Schicht eine Dicke von 50-300 µm aufweist.

5. Optoelektronisches Sensorsystem nach einem der vorstehenden Ansprüche, **dadurch gekennzeichnet, dass** die zweite Schicht aus Polydimethylsiloxan (PDMS) besteht.

6. Optoelektronisches Sensorsystem nach einem der vorstehenden Ansprüche, **dadurch gekennzeichnet, dass** zwischen zweiter Schicht und Sensorschicht sich weitere optisehe Filterschichten befinden.

7. Optoelektronisches Sensorsystem nach Anspruch 5, **dadurch gekennzeichnet, dass** der zweiten Schicht eine Substanz zugesetzt ist, die das optische Transmissionsverhalten dieser Schicht verändert.

8. Optoelektronisches Sensorsystem nach Anspruch 7, **dadurch gekennzeichnet, dass** die zugesetzte Substanz ein absorbierendes Pigment oder ein Farbstoff ist.

9. Optoelektronisches Sensorsystem nach einem der vorstehenden Ansprüche, **gekennzeichnet durch**
- einen die erste Schicht bildenden ersten Glasträger zum Auftragen von Microarray Spots auf seiner Oberfläche
- einen eine der zwei Glasschichten bildenden zweiten Glasträger als Substrat für die Sensorschicht
- einen die andere der zwei Glasschichten bildenden dritten Glasträger als Einkapselung für die Sensorschicht
- eine zwischen dem zweiten und dem dritten Glasträger liegende Sensorschicht bestehend aus einer oder mehreren Halbleiterschichten auf der Basis eines organischen Halbleiters zwischen zwei Elektrodenschichten, von denen die der Probe zugewandte Elektrodenschicht zumindest bereichsweise lichtdurchlässig ausgebildet ist
- eine PDMS Zwischenschicht zwischen dem ersten und dem dritten Glasträger
- sowie ein auf der Oberfläche des ersten Glasträgers angeordnetes Prisma, das den von einer Lichtquelle emittierten Lichtstrahl unter definiertem Winkel in den ersten Glasträger einleitet, wo er unter Totalreflexion an der PDMS Zwischenschicht in dem ersten Glasträger als planare Lichtwelle geführt wird.

10. Optoelektronisches Sensorsystem nach Anspruch 9, **dadurch gekennzeichnet, dass** der Eintrittswinkel des Lichtstrahls in den ersten Glasträger oberhalb des Grenzwinkels für Totalreflexion zwischen Glas und PDMS, also oberhalb von 69° liegt.

11. Optoelektronisches Sensorsystem nach Anspruch 9 oder 10, **dadurch gekennzeichnet, dass** die Dicke des ersten Glasträgers 50 - 200 µm, des ersten Glasträgers zusammen mit dem dritten Glasträger und der PDMS Zwischenschicht etwa 300 µm und die Gesamtdicke des Sensorsystems etwa 1 mm beträgt.

## Claims

1. An optoelectronic sensor system for stimulating and detecting samples, with a surface for the application of the samples and an underlying layer system with a transparent first layer with a first refractive index, into which light can be coupled in for stimulating the sample, and an adjoining second layer with a second, smaller refractive index for generating a total reflection of the coupled light and a spreading planar light wave resulting therefrom in the first layer, wherein the surface for the application of the samples is formed by the surface of the first layer on which a total reflection takes place, in which an evanescent field with a penetration depth of 100 to 500 nm is created, and an optoelectronic sensor layer lying under the second layer, consisting of one or more semiconductor layers based on an organic semiconductor between two electrode layers, of which the electrode layer facing the sample is designed to be translucent at least in some regions, **characterized in that** the optoelectronic sensor layer is located between two glass layers and that the sensor system is configured for a laser, LED or OLED having a wavelength of 300 to 650 nm to be used as the stimulating light source.

2. The optoelectronic sensor system according to claim 1, **characterized in that** on the first layer, a prism or grid is arranged for coupling in the light.

3. The optoelectronic sensor system according to claim 1 or 2, **characterized in that** the first layer is made of glass.

4. The optoelectronic sensor system according to one of the preceding claims, **characterized in that** the first layer has a thickness of 50 to 300 µm.

5. The optoelectronic sensor system according to one of the preceding claims, **characterized in that** the second layer is made of polydimethylsiloxane (PDMS).

6. The optoelectronic sensor system according to one of the preceding claims, **characterized in that** additional optical filter layers are located between the second layer and the sensor layer.

7. The optoelectronic sensor system according to claim 5, **characterized in that** a substance is added to the second layer, which substance changes the optical transmission behavior of said layer.

8. The optoelectronic sensor system according to claim 7, **characterized in that** the added substance is an absorbing pigment or a colorant.

9. The optoelectronic sensor system according to one of the preceding claims, **characterized by**
- a first glass substrate forming the first layer for applying microarray spots on its surface
- a second glass substrate forming one of the two glass layers as a substrate for the sensor layer
- a third glass substrate forming the second of the two glass layers as an encapsulation for the sensor layer
- a sensor layer lying between the second and the third glass substrate, consisting of one or more semiconductor layers based on an organic semiconductor between two electrode layers, of which the electrode layer facing the sample is designed to be translucent at least in some regions,
- a PDMS intermediate layer between the first and the third glass substrate,
- and a prism arranged on the surface of the first glass substrate, which prism introduces the light beam emitted from a light source at a specified angle into the first glass substrate, where it is guided under total reflection at the PDMS intermediate layer in the first glass substrate as a planar light wave.

10. The optoelectronic sensor system according to claim 9, **characterized in that** the entry angle of the light beam into the first glass substrate is preferably greater than the critical angle for total reflection between glass and PDMS, i.e. above 69°.

11. The optoelectronic sensor system according to claim 9 or 10, **characterized in that** the thickness of the first glass substrate is 50 to 200 µm, that of the first glass substrate together with the third glass substrate and the PDMS intermediate layer is about 300 µm and the total thickness of the sensor system is about 1 mm.

## Revendications

1. Système de capteur opto-électronique pour l'excitation et la détection d'échantillons, avec une surface pour l'application des échantillons et un système de couches disposé en dessous avec une première couche transparente avec un premier indice de réfraction, dans lequel une lumière pour l'excitation de l'échantillon peut être introduite, et une deuxième couche adjacente, avec un deuxième indice de réfraction plus petit, pour la production d'une réflexion totale de la lumière introduite et d'une onde lumineuse planaire se propageant dans la première couche, dans lequel la surface pour l'application des échantillons est constituée du côté supérieur de la première couche et une réflexion totale y a lieu, dans laquelle un champ évanescent avec une profondeur de pénétration de 100 à 500 nm apparaît, et une couche de capteur opto-électrique se trouvant sous la deuxième couche, constituée d'une ou plusieurs couches semi-conductrices à base d'un semi-conducteur organique entre deux couches d'électrodes, dont la couche d'électrode orientée vers l'échantillon est réalisée de manière translucide au moins à certains endroits, **caractérisé en ce que** la couche de capteur opto-électrique se trouve entre deux souches de verre et **en ce que** le système de capteur est conçu de façon à utiliser, en tant que source de lumière d'excitation, un laser, LED ou OLED, avec une longueur d'onde de 300 - 650 nm.

2. Système de capteur opto-électronique selon la revendication 1, **caractérisé en ce que**, sur la première couche, est disposé un prisme ou une grille pour l'introduction de la lumière.

3. Système de capteur opto-électronique selon la revendication 1 ou 2, **caractérisé en ce que** la première couche est constituée de verre.

4. Système de capteur opto-électronique selon l'une des revendications précédentes, **caractérisé en ce que** la première couche présente une épaisseur de 50 - 300 µm.

5. Système de capteur opto-électronique selon l'une des revendications précédentes, **caractérisé en ce que** la deuxième couche est constituée de polydiméthylsiloxane (PDMS).

6. Système de capteur opto-électronique selon l'une des revendications précédentes, **caractérisé en ce que**, entre la deuxième couche et la couche de capteur, se trouvent d'autres couches de filtres optiques.

7. Système de capteur opto-électronique selon la revendication 5, **caractérisé en ce que**, à la deuxième couche, est ajoutée une substance qui modifie le comportement de transmission optique de cette couche.

8. Système de capteur opto-électronique selon la revendication 7, **caractérisé en ce que** la substance ajoutée est un pigment ou colorant absorbant.

9. Système de capteur opto-électronique selon l'une des revendications précédentes, **caractérisé par**
- un premier support en verre formant la première couche, pour l'application d'une micro-matrice de points sur sa surface
- un deuxième support en verre formant une des deux couches de verre, en tant que substrat pour la couche de capteur,
- un troisième support en verre formant l'autre des deux couches de verre, en tant qu'encapsulation pour la couche de capteur,
- une couche de capteur, disposée entre les deuxième et troisième supports en verre, constituée d'une ou plusieurs couches semi-conductrices à base d'un semi-conducteur organique entre deux couches d'électrodes, dont la couche d'électrode orientée vers l'échantillon est réalisée de manière translucide au moins à certains endroits,
- une couche intermédiaire en PDMS entre les premier et troisième supports en verre,
- ainsi qu'un prisme disposé sur la surface du premier support en verre, qui introduit le rayon lumineux émis par une source de lumière avec un angle défini dans le premier support en verre, où il est guidé, avec une réflexion totale sur la couche intermédiaire en PDMS dans le premier support en verre, sous la forme d'une onde lumineuse planaire.

10. Système de capteur opto-électronique selon la revendication 9, **caractérisé en ce que** l'angle d'entrée du rayon lumineux dans le premier support en verre est supérieur à l'angle limite pour la réflexion totale entre le verre et le PDMS, donc supérieur à 69°.

11. Système de capteur opto-électronique selon la revendication 9 ou 10, **caractérisé en ce que** l'épaisseur du premier support en verre est de 50 - 200 µm, du premier support en verre conjointement avec le troisième support en verre et la couche intermédiaire en PDMS est d'environ 300 µm et l'épaisseur totale du système de capteur est d'environ 1 mm.
